(19)

Europäisches
Patentamt
European
Patent Office
Office européen
des brevets

(11) **EP 1 972 893 A1**

(12) **EUROPEAN PATENT APPLICATION**

(43) Date of publication:
**24.09.2008 Bulletin 2008/39**

(51) Int Cl.:
*G01C 21/00* (2006.01)   *G05D 1/02* (2006.01)

(21) Application number: **07005759.1**

(22) Date of filing: **21.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Universiteit Gent
9000 Gent (BE)**

(72) Inventor: **Gautama, Sidharta
9000 Gent (DE)**

(74) Representative: **Bird, William Edward et al
Bird Goën & Co.
Klein Dalenstraat 42A
3020 Winksele (BE)**

(54) **System and method for position determination**

(57)     The present invention relates to a system (100) and method for generating position determination information and to applications using it. Such a system comprising an image receiving means (102) for obtaining at least one image of the environment, such as e.g. a stereo image measuring device. The system furthermore comprises a control point information obtaining means (104) for obtaining control point position information about a position of at least one control point (152) in the environ- ment. The system also comprises an image processing means (108) for associating said control point position information about a position of the at least one control point (152) in the environment to an image of the at least one control point (152) in the at least one image of the environment and for deriving, from the at least one image of the environment, position information of at least one object (202) in the environment taking into account the associated position information of the image of the at least one control point (152).

**Fig. 2**

EP 1 972 893 A1

## Description

## Technical field of the invention

The present invention relates to a method and system for determining positions of objects, e.g. in a three dimensional environment. More particularly, the present invention relates to a method and system for determining a position of an object using a mobile system, e.g. for mapping and navigation.

## Background of the invention

To date, the use of mapping systems and street-level geospatial imaging, e.g. for use in motor vehicles or for imaging purposes, has been widely spread and still is rapidly growing. This imposes not only the requirement that more and more areas can be mapped appropriately, but it also imposes additional requirements regarding accuracy, resulting in a need for efficient and reliable systems for generating position determination and/or mapping information having a high level of accuracy.

A known way of generating position determination information or mapping information uses an image based mobile mapping system. One example is the GPSVan developed by the Center for Mapping at the Ohio State University [1]. This mobile mapping system is designed to map railway, highway and the transportation infrastructure such as for example roads, signs, and bridges while traveling at normal traffic speed. The GPSVan positioning module uses a differential global positioning system (DGPS) and an inertial navigation system (INS) to record the vehicle's position during temporary global positioning system data outages. The positioning of the vehicle is good to 10 cm at three-second intervals (i.e. 0.3 frames/sec) when GPS data is available. GPS data outages of 30 s, 60 s and 120 s cause the positioning degradation to the level of 0.2 m, 0.4 m and 1.0 m, respectively.

A system using similar features is VISAT, developed at the University of Calgary. VISAT uses a high accuracy strapdown inertial navigation system to provide high quality angular orientation parameters of the CCD cameras, along with positional orientation parameters from DGPS. An INS position accuracy of 10-30 cm is reported depending on the GPS outage period (30 sec - 3 min). The accuracy is also dependent of the trajectory taken (straight line versus curve). The accuracy reported is only on the position of the INS. 3D measurement of field objects in the stereo images will be less accurate depending on the distance to the camera.

US patent 6,526,352 describes an arrangement and method for mapping a road during travel of a vehicle having two data acquisition modules arranged on sides of the vehicle, each including a GPS receiver and antenna for enabling the vehicle's position to be determined and a linear camera which provides one-dimensional images of an area on the respective side in a vertical plane perpendicular to the road such that information about the road is obtained from a view in a direction perpendicular to the road. A processor unit forms a map database of the road by correlating the vehicle's position and the information about the road. Instead of or in addition to the linear cameras, scanning laser radars are provided and transmit waves downward in a plane perpendicular to the road and receive reflected waves to provide information about distance between the laser radars and the ground for use in forming the database.

## Summary of the invention

It is an object of the present invention to provide good methods and systems for determining position of objects. It is an advantage of embodiments according to the present invention that systems and methods are provided allowing good absolute positional accuracy for determining position of objects. It is an advantage of embodiments according to the present invention that a reliable solution is provided for a positioning system based on image information. It is an advantage of embodiments of the present invention that the reliability is good over the full trajectory, independent of the environmental features present. It is an advantage of some embodiments of the present invention that an absolute positional accuracy of 10cm or better can be obtained.

The above objective is accomplished by a method and device according to the present invention.

The present invention relates to a system for generating position determination information, the system comprising an image receiving means for obtaining at least one image of the environment, a control point information obtaining means for obtaining control point position information about a position of at least one control point in the environment, an image processing means for associating said control point position information about a position of the at least one control point in the environment to an image of the at least one control point in the at least one image of the environment and for deriving, from the at least one image of the environment, position information of at least one object in the environment taking into account the associated position information of the image of the at least one control point. The control point information may be obtained from a data repository, e.g. it may be a data repository within the system, e.g. local to the system, such as stored in a solid state memory, a magnetic disk such as a hard drive, an optical disk such as a CD-ROM or DVD-ROM or any other storage device or the control information may be obtained via any form of communication path including wire, fibre, wireless communication paths. The control point information is preferably information not derived directly from any image of the environment concurrently obtained from the image receiving means.

It is an advantage of embodiments according to the present invention that a high positional accuracy can be guaranteed over the full trajectory to be covered.

It furthermore is an advantage of embodiments of the present invention that the measurements are independent of the availability of highly accurate GPS data, which often cannot be guaranteed over the full trajectory in view of connectivity to global positioning system data.

It is an advantage of embodiments according to the present invention that highly accurate 3D measurements can be carried out, e.g. using integrated positional and stereo data captured on a mobile support.

Position information about at least one imaged object in the environment thus may be obtained by reference to positional information of imaged control points in the image of the environment obtained, not solely by reference to the vehicle from where the images are recorded.

The position information about a position of control points in the environment may be geographic position information with respect to a reference system fixed to the surface of the earth. The geographic position information also may be position information with respect to a surface of an ellipsoid modelling the earth.

The at least one image of the environment may comprise a three dimensional image.

The at least one image of the environment may comprise a stereoscopic image.

The at least one image of the environment may comprise a dynamic image. The dynamic image may be a video image.

The image processing means may furthermore be adapted for determining an image of the control points in the at least one image of the environment.

The image receiving means may comprise at least one image recording means for recording the at least one image of the environment. The image recording means may be a camera.

The image receiving means may comprise at least two image recording means for recording the image of the environment.

The at least one image recording means may have a fixed position in an inertial navigation system, wherein the image processing means furthermore may take into account inertial navigation system information for determining the position of the at least one imaged object. The image processing means may take into account the relative position of the at least one image recording means.

The image processing means may comprise a stochastic filter for associating said control point position information about a position of the at least one control point in the environment to an image of the at least one control point in the at least one image of the environment. The stochastic filter may be a Kalman filter.

The system may furthermore comprise an accuracy control system adapted for increasing the number of control points used to obtain a predetermined accuracy.

It is an advantage of embodiments of the present invention that the overall degree of accuracy for position determination required can be adapted by selecting the density of control points, e.g. ground control points, used for compensating drift. It is an advantage of embodiments of the present invention that the required accuracy for the inertial navigation system can be reduced, e.g. allowing a larger drift of the inertial navigation system, by appropriately selecting the data of ground control points used, i.e. for example by selecting a higher density of ground control points. The density of the control points, e.g. control point network, allows to compensate for the inertial navigation system drift.

The system may furthermore comprise a selecting means for selecting between the image processing means and a data processing means based on a global positioning system.

The at least one image may comprise dynamic images and the image processing means may be adapted for, in a given frame, taking into account position control information of control points associated in a previous and/or a following frame.

The system may comprise an inertial navigation system for determining determine relative movement of an object in six degrees of freedom in space.

The system furthermore may comprise a track planning means or may be adapted for selecting from a plurality of tracks based on available control points, a track having a suitable accuracy for an application envisaged.

The present invention also relates to a method for generating position determination information in an environment, the method comprising obtaining at least one image of the environment, obtaining position information about at least one control point, associating position information about a position of the at least one control point in the environment to an image of the at least one control point in the at least one image of the environment, and deriving, from the at least one image of the environment, position information of at least one object in the environment taking into account the associated position information of the image of the at least one control point. The control point information may be obtained from a data repository, e.g. it may be a data repository within the system, e.g. local to the system, such as stored in a solid state memory, a magnetic disk such as a hard drive, an optical disk such as a CD-ROM or DVD-ROM or any other storage device or the control information may be obtained via any form of communication path including wire, fibre, wireless communication paths. The control point information is preferably information not derived directly from any concurrently obtained image of the environment.

The at least one image of the environment is a three dimensional image.

Obtaining at least one image of the environment may comprise recording a stereoscopic image of the environment.

Associating position information about a position of the at least one control point in the environment to an image of the at least one control point in the at least one image of the environment may comprise using a stochastic filter.

The stochastic filter may be a Kalman filter.

The method furthermore may comprise controlling the number of control points for obtaining a predetermined accuracy.

The method furthermore may comprise selecting deriving positional information taking into account the associated position information of the image of the at least one control point or deriving positional information of the object based on a global positioning system.

The at least one image may comprise a plurality of frames, wherein deriving positional information of the object using one frame comprises taking into account positional information of control points detected in previous frames and positional information of control points detected in further frames.

The present invention also relates to a computer program product for, when run on a computer, performing a method as described above.

The present invention furthermore relates to a machine readable data storage device storing such a computer program product and/or to transmission of such a computer program product over a local or wide area telecommunications network.

The present invention also relates to an application for mapping or surveying an object, the application using position determination information obtained with a system as described above or a using a method as described above.

The present invention also relates to an image of an object in an environment, the image comprising position information obtained with a system as described above or using a method as described above.

It is an advantage of embodiments of the present invention that not only the high accuracy positional requirements are obtained, but also that these are obtained consistently over the full trajectory of the object, even if significantly different conditions are present at different areas of the trajectory.

It is also an advantage of embodiments of the present invention that the reliability information allows a user to validate if accuracy performance is reached with the given system settings. This information for example allows to plan the field work to collect the control point network, e.g. ground control point network, before the start of the data collection.

It furthermore is an advantage of embodiments according to the present invention that the system and method allows to replan in an efficient and user-friendly way by adding additional control points, e.g. ground control points, in order to obtain the expected accuracy.

It is an advantage of embodiments of the present invention that the obtained methods and systems can be easily combined with existing methods and systems for generating position determination information, such as e.g. solutions based on global positioning system information in combination with the inertial navigation system, e.g. for areas where a good global positioning system performance is guaranteed.

It is an advantage of the present invention that accurate three dimensional measurements in world coordinate system can be obtained based on video images recorded from a mobile support. It is an advantage of the system and method used that a user, e.g. land surveyor, can digitally map object boundaries in the field without being on that location, e.g. from behind his desk, with a high absolute positional accuracy, e.g. an accuracy better than 30cm, preferably better than 25cm, more preferably better than 20cm, even more preferably better than 15cm, still more preferably better than 10cm.

It is an advantage of embodiments according to the present invention that external geographic information can be used for production of new position determination information data.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for determining position of objects, for example improved methods and apparatus for mapping and navigation.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a schematic overview of standard and optional parts of a system for generating position determination information according to embodiments of the present invention.

Fig. 2 is a schematic illustration of the relative positioning of a vehicle with respect to a control point, as can be used in embodiments according to the present invention..

Fig. 3 vehicle for recording position determination information or mapping information as can be used in embodiments according to the present invention. Fig. 4 is a schematic overview of information flow that may occur in embodiments according to the present invention.

Fig. 5 is a schematic overview of a computing system as can be used for carrying out the methods according to embodiments of the present invention.

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Furthermore, while some embodiments described herein include some but not other features included in other embodiments, combinations of features of different embodiments are meant to be within the scope of the invention, and form different embodiments, as would be understood by those in the art. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. A global positioning system relates to a positioning system that is satellite-based and allows to determine a latitude, longitude and elevation of a GPS receiver on the earth surface. It thus provides a geographic positioning or localisation of objects. An inertial navigation system is a relative positioning system allowing determination of the relative movement of an object. It may e.g. use angular rate sensors and accelerometers together with a computational unit. It may allow to determine relative movement of an object in six degrees of freedom in space, namely for three translational directions (x,y,z) and three rotational directions (theta, psi, phi). A geographic or geodetic reference frame or absolute reference frame in the present application is a reference frame linked to a specific ellipsoid used to model the earth, allowing to provide well-defined geographic reference coordinates for objects on the earth.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

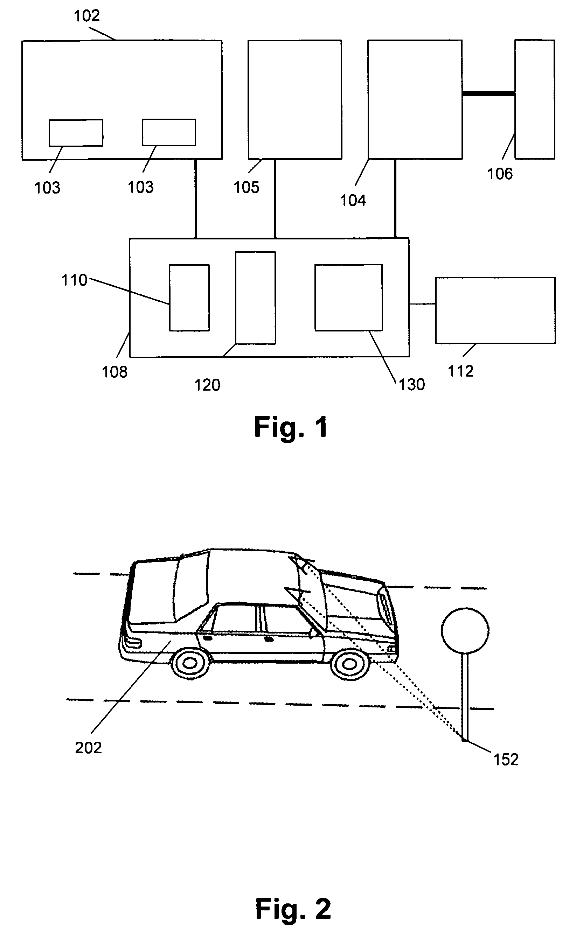

In a first aspect, the present invention relates to a system for generating position determining information. Such position determining information may for example be suitable for mapping applications. A schematic representation of an exemplary system 100 for generating position determination information is shown in Fig.1. The system 100 comprises an image receiving means 102 for obtaining an image of the environment. In a preferred embodiment, the image of the environment is a three dimensional image. The image may e.g. be a stereoscopic image, for example obtained by acquiring stereo images using a setup of two or more camera's mounted on a frame. The images may be video images or a set of images recorded over time, i.e. at given intervals such as for example at regular intervals. The image of the environment may be obtained from an external recording means, or, preferably, the image receiving means 102 may comprise at least one camera 103. The at least one camera 103 may be a digital or analogue camera. The at least one camera 103 may be calibrated for internal and external parameters so that for a given frame configuration the at least two dimensional, preferably three dimensional coordinates, of a point in the image can be measured in a local coordinate system associated with the stereo frame. Such an associated local coordinate system or local camera frame from where the image of the environment is taken can be transformed to an absolute reference system using an inertial navigation system (INS). As will be set out later, the imaging recording means or camera 103 may be a moving system, wherein the images received in the image receiving means 102 are video images or dynamic images recorded for different positions of the imaging recording means or camera 103 at different moments in time. Such a system can advantageously be used for obtaining position information for mapping systems, as required information may be gathered while the transportation means 202 is moving, resulting in a high efficiency of obtaining position determination information. Such information may then be used and stored in mapping and positioning systems for individual users, such as e.g. in mapping and positioning systems for use in vehicles, like for example cars. Data acquisition and/or image calculation based on the recorded or imaged data may be performed using any suitable driving applications, e.g. based on or built using LabView.

The system 100 furthermore may comprise a means for obtaining control point information, also referred to as a control point information obtaining means 104, allowing to obtain position information about a position of at least one control point 152 in the environment. Such a control point 152 in the environment may be any type of control point 152 for which geographic referenced position information is available or can be made available, such as positions of traffic signs, position of small well localised environmental objects, etc. A survey instrument may be used for measuring a number of control points on site. The control point information thereby preferably comprises a geographical position of the control point, which may be measured for example using a global positioning system, a surveyor or in any other suitable way. It is an advantage that such information can be determined even for places where no GPS is operational e.g. due to environmental disturbances, as also other means of determining geographical position can be used. The means for obtaining control point information may obtain such information via a communication path such as e.g. a network, from one or more storing systems 106, such as one or a plurality of databases or look up tables. Such information also may be stored locally in the system for generating position determining information. Such control points will be taken into account for determining position determination information for objects in the image of the environment taken, using an image of the at least one control point in the at least one image of the environment. Imaging of such a control point 152 in the environment is schematically illustrated in Fig. 2. The at least one control point 152 preferably is a plurality of control points. Preferably a network of control points is present providing absolute geographical position information near all places of interest.

The system 100 furthermore may comprise an inertial navigation system (INS) 105 as indicated in Fig. 1, which is a relative positioning system allowing determination of the relative movement of an object and which preferably is used, together with control points, to transform the local camera frame to an absolute reference frame. The inertial navigation system 105 thus may allow determination of the relative movement of an object. It may e.g. use angular rate sensors and accelerometers together with a computational unit. It may allow to determine relative movement of an object in six degrees of freedom in space, namely three translational directions, i.e. movement in x, y, z direction, and three rotational directions, i.e. movement by rotation around three axis e.g. over angles theta, psi, phi. Such a system may comprise information about the relative position of the objects in the image with respect to the local camera frame. Information of the inertial navigation system may comprise a relative position, a speed, a viewing angle, position of different image recording means, etc. The inertial navigation system information also may comprise an absolute geographic position of the inertial navigation system, e.g. determined by GPS. In such a case, the system and method according to the present invention then may be used for correcting for drift of the inertial navigation system.

The system 100 furthermore comprises an image processing means 108. The image processing means 108, may be an image processor. The image processing means 108 is adapted for associating the control point position information for the at least one control point 152 in the environment to an image of the at least one control point 152 in the image of the environment. In this way, absolute geographic position can be obtained by coupling the local camera frame from where the image of the environment is taken to a world coordinate system, i.e. a geographic or geodetic coordinate system. Such geographic position determination may be required e.g. for surveying purposes or mapping purposes. The image of the control point 152 may be identified in any suitable way. This may be performed for example manually. Alternatively, determination of such control points 152 may be performed in an automatic or automated way, e.g. using image recognition algorithms, using neural networks, etc. The image processing means 108 therefore may comprise a control point recognition module 110. The control points may be identified in acquired stereo image frames.

The image processing means 108 furthermore is adapted for deriving, from the image of the environment, position information of at least one object in the environment taking into account the associated position information of the image of the at least one control point 152. The image processing means 108 furthermore preferably takes into account information from the inertial navigation system. Therefore a data transfer may be provided between the image processing means 108 and the inertial navigation system. Furthermore, if images are recorded from a mobile support, use may be made of associated movement data of the mobile support and the known relative geometry of cameras and positioning instruments. The position and physical dimensions of objects in subsequent stereo image frames may be determined. The latter may be directly in the image wherein a control point is identified or in image frames in between image frames wherein control points can be measured.

The object may be the point of origin of the local camera frame from where the image is recorded, such as e.g. a position of the transportation means for a camera system used, or it may be an object imaged in the image of the environment. In order to couple the control point position information to the position of the transportation means, to the origin or a point in the local camera frame or to the object in the image, the position and viewpoint of the image recording means 103 with which the image is recorded may be taken into account. The position information can be geographic position information about an imaged object, based on the relative position of the imaged object in the at least one image of the environment, and the absolute geographic position information for the control points imaged in the image of the environment. Determination of such an absolute geographic position information of at least one object of interest in the environment may for example be obtained by taking into a relative position of the object of interest with respect to the at least one control point of interest. The absolute geographic position information of at least one object of interest in the environment may also be obtained by taking into account a relative position of the object of interest with respect to a local camera frame from which the image is obtained and the relative position of the control point(s) 152 for which absolute geographic position is known. In order to determine absolute geographic positions of objects, the coordinates of the local camera framework from which the image is received or the coordinates of the local camera framework coupled to the image thus preferably is transferred to a world coordinate system, also referred to as geographic reference frame. To calculate this transformation, a so-called "hand-eye calibration" may be performed to place the geometry of the imaging frame work in a world coordinate system. Alternatively, or in addition thereto, the initial position of the local camera frame may be predetermined and deriving, from the image of the environment, position information of at least one object in the environment taking into account the associated position information of the image of the at least one control point 152 may be performed to correct for drift of the system, e.g. of the inertial navigation system, over time. In other words, position information of control points in the image may be used for recalibrate the position of the system, e.g. in order to correct for the drift of the inertial navigation system. Such a drift may be an uncontrolled drift being up to 1 or 2 cm/sec.

The image processing means 108 may use whole or part of the imaged environment. It may comprise a setting unit for setting the search area to be used for image correlation processing based on the control points determined in the control point recognition module 110. In this way, the reference data being position information data and the image data that will be combined are selected. The image processing means 108 may perform an orientation calculation for this data in order to obtain appropriate matching.

The image processing means 108 may integrate forward and backward control points, and the different observations of the object in overlapping or subsequent image frames. Furthermore, the predicted positional accuracy of the 3D measurement due to distance to the device, hardware properties and digitalisation errors are taken into account.

The system 100 furthermore may comprise an output means 112 for exporting the obtained positional information for the object, e.g. the three dimensional measurement information for the object. The obtained information may be position related information but furthermore may comprise physical dimensions of objects. Such information may be exported together with metadata. Such metadata may be documenting the estimated accuracy of the measurement. Other information related to the object also may be included in the metadata. Such information may depend on the application for which the data will be used. The output means may comprise a display unit such as e.g. a stereo monitor, a personal computer monitor or the like allowing imaging, such as e.g. providing stereoscopic vision.

The image processing means 108 thus may be adapted for processing, computing, calculating, determining or the like of data, which refers to an action and/or processes of a computer or computing system, or similar electronic computing device, that manipulate and/or transform data represented as physical, such as electronic, quantities into other data similarly represented as physical quantities. Such an image processing means 108 may comprise "CPU" or processor, which may refer to any device or portion of a device that processes electronic data, e.g., from registers and/or memory to transform that electronic data into other electronic data that, e.g., may be stored in registers and/or memory. The term memory as used herein also encompasses a storage system such as a disk drive unit. The image processing means 108 may include a memory subsystem including main RAM and/or a static RAM, and/or ROM. The image processing means 108 may comprise a graphics processing unit. The image processing means 108 may include one or more processors. The processors may accept computer-readable (also called machine-readable) code containing instructions. A bus subsystem may be included for communicating between the components.

In preferred embodiments according to the present invention, the image processing means 108 comprising using a stochastic filter 120 for associating at least one control point to the at least one image of the environment. Such a stochastic filter 120 may e.g. be a Kalman filter. The filter 120 may fuse the data to predict the absolute position of an object of the image associating control point information with the at least one image of the environment. Such association may be used for calibration or re-calibration of the inertial navigation system to absolute geographical coordinates. The filter may be designed to fuse data of a control point network, e.g. ground control point network with the inertial navigation system measurements. Such a filter may allow to predict the absolute position of local camera frame from wherein the image is taken or to predict the absolute position of objects in the image of the environment. The position of such points may be determined by the position of the local camera frame estimated using information from the imaging technique, such as e.g. stereo photogrammetry, and the known position of the control points and by inertial navigation system measurements. The inertial navigation system measurements may be based on previously calibrated positions of the local reference frame or may be based on a different technique for obtaining position. In addition the stochastic filter, such as e.g. the Kalman filter, allows to estimate the reliability of the prediction, based on an error covariance matrix for the inertial navigation system and the photogrammetric measurements. The error covariance matrix on the photogrammetric measurements depends among others on the imaging geometry (baseline, CCD resolution, lens focal length) and the distance of the observed control points, e.g. ground control points, to the camera reference frame. Based on the stereo triangulation of the control points, e.g. ground control points, in the images and by using error propagation, the error covariance on the position can be estimated. The error propagation in this process relates the uncertainty on the user input to the uncertainty of the position estimation taking into account all the affecting parameters. The uncertainty on the user input is measured by estimating the (sub)pixel accuracy during the digitalisation process.

In one example, the propagation process can be modeled as follows. In the most simple case, a camera geometry with parallel image planes can be assumed, aligned epipolar lines and image coordinate systems centered at the focal point of each camera. Let the image coordinates be given by $X_L=[x_L, y_L]$ and $X_R=[x_R, y_R]$ in the left and right image, respectively. Considering these as normally distributed random vectors with means $m_L$

and $m_R$ and covariance matrices $V_L$ and $V_R$. From $X_L$ and $X_R$ the coordinates $[X, Y, Z]^T$ of the 3D point $P$ can be estimated. The simple approach of using the ideal noise-free triangulation equations $P = [X,Y,Z]^T = f(X_L, X_R)$, or

$$X = b(x_L + x_R)/(x_L - x_R)$$

$$Y = b(y_L + y_R)/(x_L - x_R)$$

$$Z = 2b/(x_L - x_R)$$

assuming a unit focal length and a baseline of 2b, and inferring the distributions of X, Y and Z as functions of random vectors $X_L$ and $X_R$ can be taken. If f was linear, P would be normal with mean $m_p = f(m_L, m_R)$ and covariance

$$V_P = J \begin{bmatrix} V_L & 0 \\ 0 & V_R \end{bmatrix} J^T$$

where J is the matrix of first partial derivatives of $f$ or the Jacobian. Since $f$ is nonlinear these expressions can be used as first-order approximations. To model the uncertainty on additional parameters of the stereo configuration (e.g. calibration errors), the function $f$ can be extended to model the additional dependencies.

In some embodiments according to the present invention, the image processing means furthermore comprises an accuracy control means 130 for determining whether for a given session accuracy falls within predetermined levels, e.g. for determining whether the accuracy is within the expected margins. Such a system furthermore may be adapted for automatically increasing the number of control points used for generating position determination information. The system thus may be adapted for selecting a density of the network of control points required for a required accuracy. Alternatively or in addition thereto, the system furthermore may be adapted for selecting different control points for obtaining a better accuracy. If not enough network control points are available to obtain the required accuracy, the system may inform the user that the expected accuracy can not be reached and may indicate that measurement of additional control point positions in the filed are required. Such an accuracy control may be performed in an automated and/or automatic way. It may be performed using a predetermined algorithm, based on neural networks, etc. In preferred embodiments, the image processing means may integrate forward and backward control points and the different observations of the object in overlapping image frames in order to have an accurate determination of the position or physical dimensions of an object in the image. The accuracy control means 130 may use information from the stochastic filter 120, as set out above, although the invention is not limited thereto.

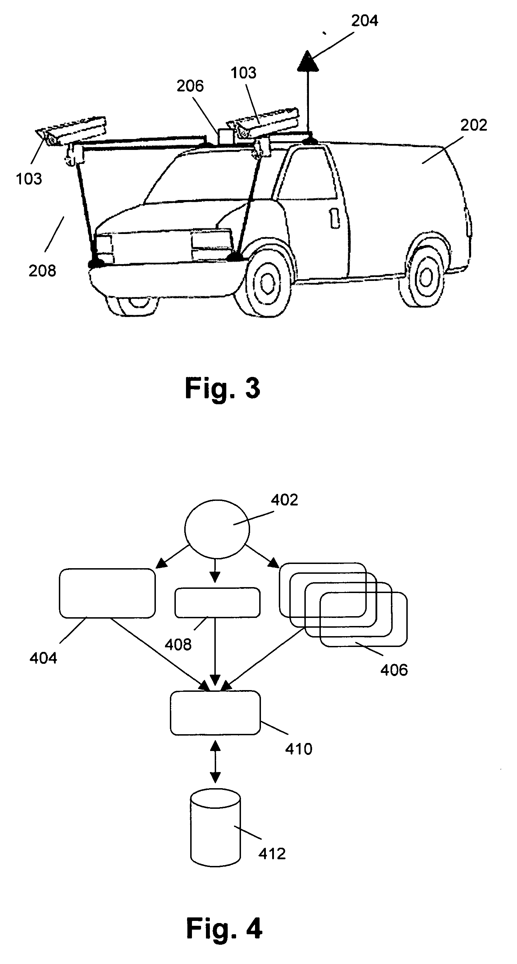

In one particular embodiment, the first aspect relates to a system as described above, whereby the system for generating position determination information is adapted for generating a plurality of position determination information using a moving platform. The image receiving means 102 thereby typically receives a plurality of images, e.g. video images or dynamic images for determining position determination information for objects along a predetermined route. For such an embodiment, part of the system or the full system may be incorporated in a transportation means, such as e.g. a vehicle. An example of such a system is illustrated in Fig. 3, whereby the image receiving means 102 includes image recording means 103 such as cameras 103, such cameras may be mounted on a reference frame on a transportation means 202, as indicated in Fig. 3, and thus the local reference frame may be moving. The inertial measurement unit 206 for determining and/or estimating position information of the local camera frame, which may be part of or provide data to the inertial navigation system information 105. The inertial measurement unit may take into account a speed of the transportation means 202, a trajectory of the transportation means 202, etc. The system furthermore may comprise an antenna for receiving information from a global positioning system 204 and a frame for supporting the image recording means 103 By way of example, a complete mapping of objects observed and derived from a video sequence recorded along a route may be obtained for a transportation means displacing at a speed between 20-30 km/h whereby video logging is performed at adequate frame rates, e.g. with a frame rate of more than 2 frames per second. In order to relate the video frames with positional information, time stamps are necessary for each captured video frame and accurate synchronization with position information about the transportation means, i.e. the inertial navigation system frame, is needed. The system may operate as described above, whereby the position information for the control points is taken into account for correcting for drift of the inertial navigation system. The inertial navigation system however typically may suffer from such short-term drift and can, using the control point position information, be compensated to achieve high positional accuracies. Such correction may be performed using control points, e.g. ground control points, measured in the field at regular intervals. The control points can be determined in the video images or dynamic images and, taking into account the predicted accuracy associated with the measurements, e.g. three dimensional (3D) measurements, of the control points due to digitisation errors, distance to the camera and/or calibration accuracy, and the control point information can be propagated along the video track in forward and backward direction.

In embodiments according to the first aspect of the present invention the information flow may be for example as indicated in Fig. 4. The information may be synchronised using a synchronisation clock providing a synchronisation signal 402. Information corresponding with inertial navigation system data 404 and image data 406 obtained from within the inertial navigation system are combined together with positional information 408 of at least one control point for which an image is recorded in the image data 406. This information is processed in the image processing means 108, whereby positional information 410 for an object in the environment is derived. This information is then stored in a storing system. Such stored information 412 may further comprise metadata concerning the object in the environment, whereby the content thereof may depend on the specific application that is envisaged.

In a second aspect, the present invention relates to a method for generating position determination information. Such a method may e.g. advantageous be performed in a system as described in the first embodiment and may comprise steps corresponding with the functionality of the different components as described in the above system. The method for generating position determination information comprises obtaining at least one image of the environment and obtaining control point position information, e.g. absolute geographic position information. The method furthermore comprises associating the control point position information to the image of the at least one control point present in the at least one image of the environment. Furthermore, the method comprises deriving positional or size related information regarding an object in the environment by using the image and thereby taking into account the positional information of the imaged control point. The method furthermore may take into account information from the inertial navigation system for deriving positional or size related information regarding an object in the environment by using the image. The method may comprise using a stochastic filter, such as e.g. a Kalman filter to fuse the control point information with the imaged data. The method furthermore may comprise a step of determining whether the accuracy of the system is significantly high. If the accuracy is not within a predetermined criterion, the accuracy may be increased by increasing the number of control points, e.g. by increasing the density of the network of control points. It may inform the user that a larger number of control points is required. The method may comprise a step for deciding whether to use global positioning information where available and whether to use the method based on control point information associated to image points as described above. The latter may be determined in view of availability of global positioning information, e.g. depending on obstruction of the global positioning signal by the environment, in view of the required accuracy, in view of the required efficiency, etc. In one embodiment, where video information is obtained by moving a transportation means along a route for which position determination information is to be determined, the method furthermore comprises, for a known network of control points, determining a suitable track for obtaining track information with high accuracy. The latter may be performed by selecting different tracks along the points of interest and evaluating the distribution of the control points along the route of interest and determining an accuracy for the different tracks. The track with the highest accuracy then may be selected.

In a third aspect, the present invention relates to an application and a system for running it for mapping or surveying an area, path, object or set of objects, whereby use is made of position determination information as obtained using a system according to the first aspect or a method according to the second aspect. Such an application may be used in transportation means, e.g. vehicles, for providing a route along which a person needs to travel, in a surveying system, etc.

In one aspect, the present invention furthermore relates to a computer program product assisting in performing a method as described above. In one embodiment according to this aspect, the present invention relates to a computer program product for driving a camera for obtaining at least one image according to a method for generating position determining information as described above. The image data collection thereby may be adapted such that control points are imaged in the image of the environment taken.

In another embodiment according to this aspect, the present invention relates to a computer program product for controlling the camera and performing system calibration based on position information about at least one control point which is present in the at least one image of the environment as can be used in a method for generating position determining information.

In another embodiment according to the present aspect, the present invention relates to a computer program product for data synchronisation and acquisition by the system for obtaining at least one image and a corresponding system as can be used in a method for generating position determining information. The data synchronisation thereby may comprise synchronising the absolute geographic position information for the control points visible in the at least one image of the environment and the data obtained by the imaging system.

In another embodiment according to the present aspect, the present invention relates to a computer program product for data integration between the control point information and the image of the environment or associated data concerning the camera reference frame. In these embodiments, the software may be adapted for three dimensional digitalisation of video images.

The computer program product according to the present aspect may be adapted for planning a track for determining position determination information with a given accuracy. The track thereby may be adapted in view of the control points available along the track, such that control points may be present at regular intervals throughout the track, i.e. that no large gaps occur wherein no control point information is present for images along the track. In other words, if the user has a given network of control points, different tracks can be compared and the track resulting in the highest accuracy may be selected to be followed for determining position related information.

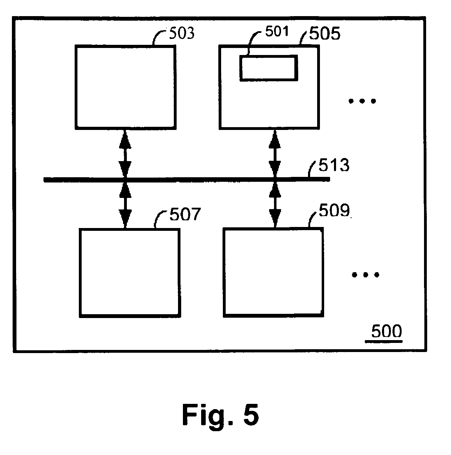

Furthermore, the above-described method embodiments of the present invention may be implemented in a processing system 500 such as shown in Fig. 5. Fig. 5 shows one configuration of processing system 500 that includes at least one programmable processor 503 coupled to a memory subsystem 505 that includes at least one form of memory, e.g., RAM, ROM, and so forth. It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 507 that has at least one disk drive and/or CD-ROM drive and/or DVD drive. In some implementations, a display system, a keyboard, and a pointing device may be included as part of a user interface subsystem 509 to provide for a user to manually input information. Ports for inputting and outputting data also may be included. More elements such as network connections, interfaces to various devices, and so forth, may be included, but are not illustrated in Fig. 5. The various elements of the processing system 500 may be coupled in various ways, including via a bus subsystem 513 shown in Fig. 5 for simplicity as a single bus, but will be understood to those in the art to include a system of at least one bus. The memory of the memory subsystem 505 may at some time hold part or all (in either case shown as 511) of a set of instructions that when executed on the processing system 500 implement the steps of the method embodiments described herein. Thus, while a processing system 500 such as shown in Fig. 5 is prior art, a system that includes the instructions to implement aspects of the methods for generating positional information of an object in an environment is not prior art, and therefore Fig. 5 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is an advantage of embodiments according to the present invention that a recalibration between the absolute geographic reference system and the inertial navigation system can be performed in a reliable way. When the system is a mobile system, such a re-calibration can be performed even without halting the system. Furthermore such a re-calibration is only little dependent on the environment, as it e.g. is not influenced by e.g. obstructed GPS signals.

It is an advantage of embodiments according to the present invention that it is based on appropriate integration of available data. Embodiments of the present invention allow to obtain centimetre accuracy by providing a solution for the drift of the inertial navigation system, which in some cases may be up to 1 to 2 cm drift each second.

It is an advantage of embodiments according to the present invention that a system is obtained with high reliability. Whereas global positioning system positioning is sometimes inadequate for surveying purposes, the present invention solves this problem by avoiding the need for global positioning systems.

It is an advantage of embodiments according to the present invention that control points measured locally in the field at regular intervals and reconstructed in the video images can be used for compensating

It is an advantage of embodiments according to the present invention that a more stable performance of a system for generating position determination information then when relying only on solutions based on global positioning and inertial navigation systems solutions due to loss of signal, trajectory shape etc. of the latter. The use of a well designed control point network, such as a ground control point network makes a highly accurate and stable system possible.

It is to be understood that although preferred embodiments, specific constructions and configurations, as well as materials, have been discussed herein for devices according to the present invention, various changes or modifications in form and detail may be made without departing from the invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1. A system (100) for generating position determination information, the system comprising

   - an image receiving means (102) for obtaining at least one image of the environment,
   - a control point information obtaining means (104) for obtaining control point position information about a position of at least one control point (152) in the environment,
   - an image processing means (108) for associating said control point position information about a position of the at least one control point (152) in the environment to an image of the at least one control point (152) in the at least one image of the environment and for deriving, from the at least one image of the environment, position information of at least one object in the environment taking into account the associated position information of the image of the at least one control point (152).

2. A system (100) according to claim 1, wherein the position information about a position of control points in the environment is geographic position information with respect to a reference system fixed to the surface of the earth.

3. A system (100) according to any of the previous claims, wherein the at least one image of the environment comprises a three dimensional image.

4. A system (100) according to any of the previous claims, wherein the at least one image of the environment comprises a stereoscopic image.

5. A system (100) according to any of the previous claims, wherein the at least one image of the environment comprises a dynamic image.

6. A system (100) according to any of the previous claims, wherein the image processing means (108) furthermore is adapted for determining an image of the control points in the at least one image of the environment.

7. A system (100) according to any of the previous claims, wherein the image receiving means (102) comprises at least one image recording means (103) for recording the at least one image of the environment.

8. A system (100) according to claim 7, wherein the image receiving means (102) comprises at least two image recording means (103) for recording the image of the environment.

9. A system (100) according to any of claims 7 to 8, said at least one image recording means (103) having a fixed position in an inertial navigation system, wherein the image processing means (102) furthermore takes into account inertial navigation system information for determining the position of the at least one imaged object.

10. A system (100) according to any of the previous claims, wherein the image processing means (108) comprises a stochastic filter for associating said control point position information about a position of the at least one control point (152) in the environment to an image of the at least one control point (152) in the at least one image of the environment.

11. A system (100) according to the previous claim, wherein the stochastic filter is a Kalman filter.

12. A system (100) according to any of the previous claims, wherein the system (100) furthermore comprises an accuracy control system adapted for increasing the number of control points used to obtain a predetermined accuracy.

13. A system (100) according to any of the previous claims, wherein the system (100) furthermore comprises a selecting means for selecting between the image processing means (108) and a data processing means based on a global positioning system.

14. A system (100) according to any of the previous claims, the at least one image comprising dynamic images, wherein the image processing means (108) is adapted for, in a given frame, taking into account position control information of control points associated in a previous and/or a following frame.

15. A system (100) according to any of the previous claims, the system (100) comprising an inertial navigation system (105) for determining determine relative movement of an object in six degrees of freedom in space.

16. A system (100) according to any of the previous claims, wherein the system furthermore comprises a track planning means for selecting from a plurality of tracks based on available control points, a track having a suitable accuracy for an application envisaged.

17. A method for generating position determination information in an environment, the method comprising

   - obtaining at least one image of the environment,
   - obtaining position information about at least one control point (152)
   - associating position information about a position of the at least one control point (152) in the environment to an image of the at least one control point (152) in the at least one image of the environment, and
   - deriving, from the at least one image of the environment, position information of at least one object in the environment taking into account the associated position information of the image of the at least one control point (152).

18. A method according to claim 17, wherein the at least one image of the environment is a three dimensional image.

19. A method according to any of claims 17 to 18, wherein obtaining at least one image of the environment comprises recording a stereoscopic image of the environment.

20. A method according to any of claims 17 to 19, wherein associating position information about a position of the at least one control point (152) in the environment to an image of the at least one control point (152) in the at least one image of the environment comprises using a stochastic filter.

21. A method according to claim 20, wherein the stochastic filter is a Kalman filter.

22. A method according to any of claims 17 to 21, the method furthermore comprising controlling the number of control points for obtaining a predetermined accuracy.

23. A method according to any of claims 17 to 22, the method furthermore comprising selecting deriving positional information taking into account the associated position information of the image of the at least one control point (152) or deriving positional information of the object based on a global positioning system.

24. A method according to any of claims 17 to 23, the at least one image comprising a plurality of frames, wherein deriving positional information of the object using one frame comprises taking into account positional information of control points detected in previous frames and positional information of control points detected in further frames.

**25.** A computer program product for, when run on a computer, performing a method according to any of claims 17 to 24.

**26.** A machine readable data storage device storing the computer program product of claim 25.

**27.** Transmission of the computer program product of claim 25 over a local or wide area telecommunications network.

**28.** An application for mapping or surveying an object, the application using position determination information obtained with a system according to any of claims 1 to 16 or a method according to any of claims 17 to 24.

**29.** An image of an object in an environment, the image comprising position information obtained with a system according to any of claims 1 to 16 or a method according to any of claims 17 to 24.

**Fig. 1**

**Fig. 2**

**Fig. 3**

**Fig. 4**

Fig. 5

**European Patent Office**

## EUROPEAN SEARCH REPORT

Application Number

EP 07 00 5759

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/059900 A (EVOLUTION ROBOTICS INC [US]; GONCALVES LUIS FILIPE DOMINGUE [US]; KARL) 15 July 2004 (2004-07-15)<br>* page 13, line 25 - page 14, line 2; figure 6 *<br>* page 26, lines 29-32 *<br>* page 27, lines 4,5,15-17 *<br>* page 29, lines 3-14 *<br>* page 30, lines 9-27 *<br>* page 31, lines 9-33; figure 2 *<br>* page 32, lines 7-32; figures 3A-3C *<br>* page 34, lines 13-33; figures 5A,5B *<br>* page 49, line 9 - page 50, line 18; figure 9 *<br>* page 52, lines 11-13 *<br>* page 53, lines 16-19 *<br>* page 73, line 16 - page 74, line 3 *<br>----- | 1-29 | INV.<br>G01C21/00<br>G05D1/02 |
| X | US 2002/049530 A1 (POROPAT GEORGE [AU]) 25 April 2002 (2002-04-25)<br><br>* paragraphs [0017] - [0030] *<br>* paragraphs [0054], [0055]; figures 1-5 *<br>* paragraphs [0077], [0078], [0081] *<br>----- | 1,3-7, 13, 16-19, 23,25-29 | TECHNICAL FIELDS SEARCHED (IPC)<br><br>G01C<br>G05D<br>G08G |
| X | EP 1 677 076 A (BOEING CO [US]) 5 July 2006 (2006-07-05)<br><br>* paragraphs [0014] - [0018]; figure 1 *<br>* paragraphs [0010], [0021] - [0031]; figure 2 *<br>----- <br><br>-/-- | 1,2,6,7, 13,16, 17,23, 25-29 | |

The present search report has been drawn up for all claims

| Place of search | Date of completion of the search | Examiner |
|---|---|---|
| Munich | 3 August 2007 | Jakob, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 972 893 A1**

**European Patent Office**

**EUROPEAN SEARCH REPORT**

Application Number

EP 07 00 5759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 999 866 A (KELLY ALONZO JAMES [US] ET AL) 7 December 1999 (1999-12-07)<br><br>* column 4, line 30 - column 5, line 6; figure 1 *<br>* column 5, line 7 - column 6, line 3; figure 2 *<br>----- | 1,2,6,7, 9,13,16, 17,23, 25-29 | |
| | | | **TECHNICAL FIELDS SEARCHED (IPC)** |

The present search report has been drawn up for all claims

| Place of search | Date of completion of the search | Examiner |
|---|---|---|
| Munich | 3 August 2007 | Jakob, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

## ANNEX TO THE EUROPEAN SEARCH REPORT
## ON EUROPEAN PATENT APPLICATION NO.

EP 07 00 5759

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2007

| Patent document cited in search report | | Publication date | Patent family member(s) | | Publication date |
|---|---|---|---|---|---|
| WO 2004059900 | A | 15-07-2004 | AU | 2003300959 A1 | 22-07-2004 |
| US 2002049530 | A1 | 25-04-2002 | WO | 9953335 A1 | 21-10-1999 |
| | | | CA | 2328227 A1 | 21-10-1999 |
| | | | EP | 1086383 A1 | 28-03-2001 |
| | | | JP | 3561473 B2 | 02-09-2004 |
| | | | JP | 2002511614 T | 16-04-2002 |
| | | | ZA | 200005640 A | 14-01-2002 |
| EP 1677076 | A | 05-07-2006 | US | 2006149458 A1 | 06-07-2006 |
| US 5999866 | A | 07-12-1999 | AT | 218221 T | 15-06-2002 |
| | | | AU | 5162498 A | 29-05-1998 |
| | | | DE | 69712906 D1 | 04-07-2002 |
| | | | DE | 69712906 T2 | 24-04-2003 |
| | | | EP | 0937284 A2 | 25-08-1999 |
| | | | WO | 9820399 A2 | 14-05-1998 |
| | | | US | 6453223 B1 | 17-09-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6526352 B